# EUROPEAN PATENT APPLICATION

(11) **EP 1 252 848 A2**
(43) Date of publication of application: **30.10.2002**
(21) Application number: 02008247.5
(22) Date of filing: 18.04.2002
(51) Int. Cl.: A47J 37/08

(54) **Flat bread and tortilla warmer**

(30) Priority: 23.04.2001 US 285841 P
(71) Applicant: HP Intellectual Corp., Wilmington, Delaware 19803 (US)
(72) Inventor: DuBois, Craig A., Trumbull, CT 06611 (US); Laskowski, Joseph J., Derby, CT 06418 (US); Krasznai, Charles Z., Bridgeport, CT 06604 (US)
(74) Representative: UEXKÜLL & STOLBERG

(57) **Abstract**

A flat bread and tortilla warmer (10) in which a pair of spring biased rollers (14,16,114,116) are rotatably mounted in a housing (12,112). Roller heating elements (18R,18L,118R,118L) in the housing heat the rollers (14,16,114,116). The rollers (14,16,114,116) pinch a flat bread in between for simultaneously heating the flat bread and moving it through a portion (26) of the housing (12,112). A second set of spaced heating elements (20R,20L,120R,120L) may be disposed below the roller heating elements for warming the flat bread after it passes through the rollers.

## Description

This application claims priority from U.S. Provisional Application No. 60/285,841, filed April 23, 2001.

The present invention relates to food warming apparatus and, more particularly, to a flat bread and tortilla warmer.

Flat breads and tortillas are in general consumed warm. It is common for people to warm their tortilla on a griddle, frying pan, or hot plate turning them so the tortilla heat up evenly. Heating is done on high temperature and more than one tortilla is usually heated at a time. After warming the tortillas, they are put into a storage container with a lid to keep them warm until needed. In this method, the tortillas are heated rapidly by heat conduction from the hot plate without losing significant moisture from the tortilla. The disadvantage with this method is that the person has to stand and continue to watch the tortilla cook so they do not overheat and burn. The tortillas are warmed before the meal and then put into a storage container to keep warm until used.

There are also toaster ovens or toaster devices for heating flat breads and tortillas. In general, these toasters use a continuous belt or other transport means for moving the flat bread or tortillas over heating elements. The heating elements heat the surface of the bread/tortilla by radiation heating and convection which causes a substantial amount of moisture to be lost from the surface of the bread/tortilla. As a result, the bread/tortilla which comes out of the toaster is toasted rather than being heated as in the conventional manner heating approach. Other heaters use support trays which support flat breads or tortillas over, or in proximity to, heating element arrays. The heaters also result in the tortilla being more toasted than heated in the conventional manner. Moreover, when using such heaters, some user supervision is needed to ensure that the tortillas/flat bread is not burned or overdone, and to remove and place new batches of tortillas in the oven. Examples of prior art tortilla warmers include the devices shown in U.S. Patents No. 5,585,231, 5,765,471 and D436,797. The present invention overcomes the problems of the prior art as will be described in greater detail below.

In view of the above, it is an object of the present invention to provide an improved flat bread and tortilla warmer.

Another object of the present invention is the provision of an improved flat bread and tortilla warmer that is easy to use and which avoids toasting the flat bread/tortilla.

These and other objects and advantages of the present invention may be achieved through the provision of a flat bread warmer which includes a housing and a pair of opposing rollers rotatably mounted in said housing. Heating elements are mounted in the housing for heating the opposing rollers. The opposing rollers are spring biased toward each other to pinch a flat bread in between for simultaneously heating the flat bread and moving the flat bread through at least a portion of said housing.

In accordance with another aspect of the invention there is provided a flat bread warmer comprising a housing. A pair of parallel opposed rollers are mounted in the housing for rotation about a horizontal axis in opposite directions. The rollers are spring biased toward each other to pinch a flat bread therebetween and move the flat bread through at least a portion of said housing. An upper resistance heating element is associated with each roller and mounted in said housing in proximity to its associated roller for heating its associated roller. At least one set of spaced lower resistance heating elements are mounted in said housing below said rollers for heating said flat bread after it passes through said rollers A motor is mounted to said housing and connected to said rollers for rotating said rollers.

In accordance with a further aspect of the invention there is provided a method of warming flat bread comprising providing a pair of opposed counter-rotating rollers, heating each of said rollers by a proximate heating element, and pinching said flat bread between said heated rollers and simultaneously heating said flat bread and moving said flat bread through said rollers.

### BRIEF DESCRIPTION OF THE DRAWINGS

Fig. 1 is an exploded perspective view of a flat bread warmer incorporating features of the present invention, and a flat bread;
Fig. 2 is a cross-sectional elevation view of the flat bread warmer in Fig. 1; and
Fig. 3 is a second exploded perspective view of a flat bread warmer in accordance with another embodiment of the present invention.

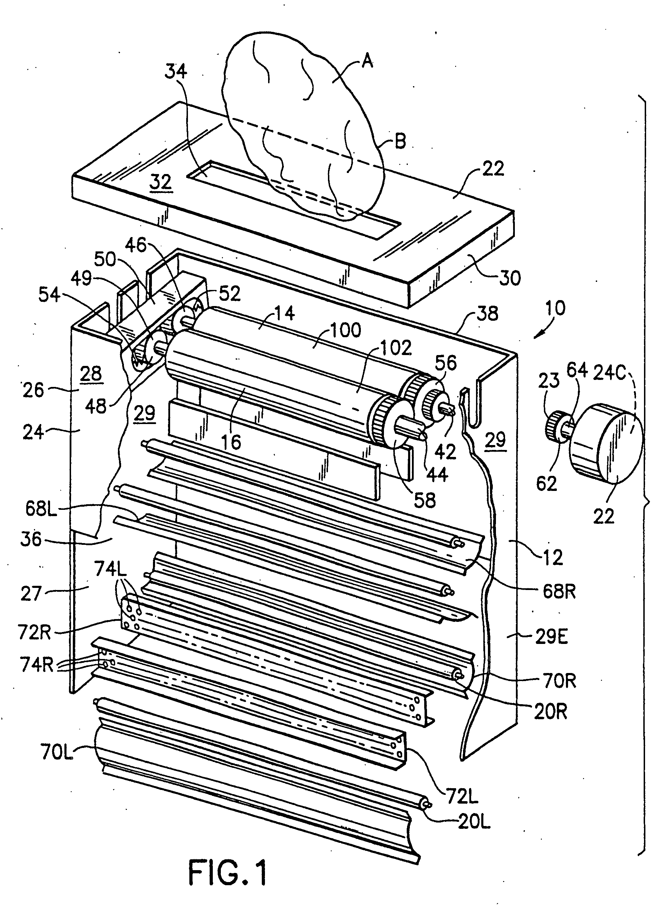

Referring to Fig. 1, there is shown an exploded perspective view of a flat bread warmer 10 incorporating features of the present invention, and a flat bread. Although the present invention will be described with reference to the single embodiment shown in the drawings, it should be understood that the present invention can be embodied in many alternate forms of embodiments. In addition, any suitable size, shape or type of elements or materials could be used.

The flat bread warmer of the present invention will be described below with particular reference to using the warmer for heating tortillas and other similar flat breads. Nevertheless, the warmer of the present invention may be used equally well for heating any other types of flat breads and pastries (for example English muffins, flat breads, pita, and other flat pastries). Referring still to Fig. 1, there is shown an exemplary tortilla A which may be a corn or flour tortilla. The tortilla is generally round (perimeter B), with a rough diameter in the range between about 5-8 inches. The tortilla A is substantially flat, with a thickness somewhat in excess of about 2 mm., though the tortilla or flat bread may be less than 2 mm. thick.

In the embodiment shown in Figs. 1-2, the flat bread warmer 10 generally comprises a housing 12, rollers 14, 16, a number of heating elements 18, 20 and a motor 22. The rollers 14, 16 and heating elements 18, 20 are housed in the housing 12. The motor 22 is mounted to the housing. The motor 22 is operably connected by transmission 23 to the rollers 14, 16 to rotate the rollers relative to the housing. The motor 22 preferably has a controller 24C for operating the motor. The controller 24C may further be connected to the heating elements 18, 20 to operate the heating elements. The rollers 14, 16 are located in the housing 12 over the heating elements 18, 20. The heating elements 18 are used to heat the rollers 14, 16. The rollers 14, 16 are rotated by motor 22 at a substantially steady rate to evenly heat the outer surface of the rollers. In order to heat a tortilla A, the user introduces the tortilla A into the housing 12 between the heated rollers 14, 16. The rollers 14, 16 pinch the tortilla A. The motor 22 rotates the rollers 14, 16 so that the tortilla A is moved between the rollers. As the tortilla A moves between the rollers, contact between the heated rollers 14, 16 and tortilla A heats the tortilla A evenly. The heated tortilla A then exits the housing into a receptacle (not shown). The heating elements 20 continue to warm the tortilla A as it moves through the housing 12 and when located below the housing 12.

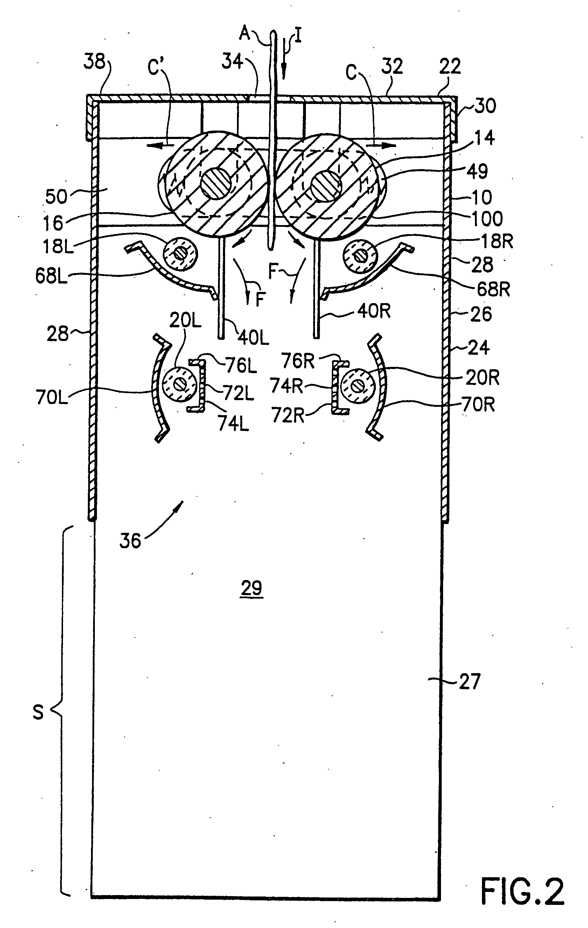

In greater detail now, and with reference to Figs. 1 and 2, the housing 12 comprises main portion 24 and upper cover or lid 22. The main portion 24 of the housing further includes an upper section 26 and a lower standoff section 27. The standoff section 27 supports the upper section 26 and suspends the upper section 26 at a desired standoff S (see Fig. 2) from a support surface (not shown) such as a counter top or table. As shown in Fig. 1, in this embodiment, the housing 12 may have a generally hexahedron shape. In alternate embodiments, the heater housing may have any suitable shape including a generally cylindrical shape. In still other alternate embodiments, the housing may be covered by an exterior ornamental shell (not shown). In that case, a thermal gap may be provided between the housing and ornamental shell. The main portion 24 of the housing 12 may be made of sheet metal such as steel or aluminum, though any other suitable material may be used including plastic or composite material. The main portion 24 has two longitudinal walls 28 and two end walls 29. The longitudinal walls 28 define the upper section 26 of the main portion 24 of the heater housing 12. The end walls 29 have a section 29E extending below the upper section 26 to define the standoff section 27 of the housing. The length of the standoff portion 27 is established to correspond to the desired standoff S. The bottom 36 of the upper section 26 is substantially open (as seen in Fig. 2) to allow ready access to the inside of the housing. The top 38 of the upper section 26 is covered by cover 22. In alternate embodiments, the housing may not have a stand off section or may be provided with a slide or chute to guide the bread out of the housing.

Cover 22 may also be made of suitable sheet metal. The sheet metal is bent or rolled by a suitable process to provide an outer rim 30 around the cover 22. The rim 30 is disposed so that cover 22 may be conformally seated over the top 38 of the housing 12 as shown in Fig 2. The top 32 of the cover may be substantially flat. An opening 34 is located into the top 32. The opening 34 is substantially centered in the cover 22 to correspond to the location of the rollers 14, 16 inside the housing 12. The cover 22 may be hinged to the housing 12 so that the cover may be rotated open or shut. The cover otherwise may be removable.

In the embodiment shown in Figs. 1-2, the flat bread warmer 10 has two rollers 14, 16 though in alternate embodiments the heater may have any suitable number of rollers. The rollers 14, 16 are substantially similar to each other. Each roller 14, 16 may preferably be made from a heavy gauge metal tube such as a cast iron or steel tube. In alternate embodiments, the rollers 14, 16 may be made from metal cylinders. The cylinders may be hollow. The length of the rollers 14, 16 is sufficient to accommodate the largest size tortilla. The diameter of the rollers 14, 16 is sized to provide a circumferential length roughly equal to the diameter of the largest tortilla A. In this embodiment the roller diameter is about 1.75 inches though the roller may have any other suitable diameter. The rollers 14, 16 have a non-stick outer surface 100, 102 such as provided by application of a non-stick coating to the exterior of the tubes. The exterior of the tubes may also have a surface profile which provides the non-stick surface. The tubes are mounted on shafts 42, 44. Bearings or bushings 46, 48 are mounted on the ends of the shaft 42, 44 of each roller.

As shown in Fig. 1, the rollers 14, 16 are mounted in the upper section 26 of housing 12 proximate the top of the housing. The rollers are mounted side by side parallel to the longitudinal walls 28. The housing is provided with roller supports 50 (only one support 50 is visible in the view shown in Fig. 1). The rollers 14, 16 are mounted by placing the end bearings 46, 48 on the shafts 42, 44 into receiving slots 49 in the roller supports 50. The slots in the supports 50 are sized to allow the bearings 46, 48 and hence rollers 14, 16 to move laterally in the direction indicated by arrows C,C¹. Each support 50 has two springs 52, 54 in the slot. In the embodiment shown in Fig. 1, the springs 52, 54 may be compression springs such as for example helically wound coil springs, though any suitable type of spring may be used. The springs 52, 54 are disposed against the corresponding bearings 46, 48 in the slot to bias the rollers 14, 16 towards each other. In this position, the rollers 14, 16 contact each other. The slots 49 in supports 50 are provided with stops (not shown) which limit outward lateral movement of the rollers 14, 16 to about 1mm. The stops may be adjustable to increase or decrease the outward movement of the rollers.

As seen in Fig. 1, each roller 14, 16 is provided with a gear 56,58 at one end to engage the transmission 23 extending from motor 22 to the rollers. The motor 22 may be an AC or DC electric motor of suitable power to rotate the rollers at a desired rate. In the preferred embodiment, the motor may be a two speed motor to rotate the rollers 14, 16 at two speeds, such as for example, 8 rpm and 12 rpm. Fig. 1 shows that motor 22 is mounted to an end wall 29 of the housing (such as for example inside the housing). However, the motor may be mounted in any other suitable location to drive the rollers. The motor 22 has a drive shaft 64 which terminates in pinion 62. Pinion 62 is mated to idler 56 on the shaft 42 of one roller 14. Thus, when motor 22 is operated, the roller 14 is rotated. The idler gear 56 is meshed with gear 58 on the other roller 16. Thus, rotation of one roller 14 causes counter-rotation of the second roller 16. The gears 56, 58 on the rollers 14, 16 may be spur gears which have sufficient backlash to allow the rollers 14, 16 to be displaced outwards without adversely affecting the operation of the gears. The meshing gears 56, 58 cause the rollers to counter rotate relative to each other (ie. right roller 14 rotates counter clockwise, and left roller 16 rotates clockwise). Alternate embodiments may use any other suitable transmission for motivating the rollers in counter rotation from the motor. In other alternate embodiments, each roller may have a motor.

The housing 12 has two scraping plates 40R, 40L mounted under the rollers 14, 16. One scraping plate 40R is mounted under the right roller 14 and the second scraping plate 40L is mounted under the left roller 16. The scraping plates are made of suitable sheet metal and each plate is in contact with the corresponding roller 14, 16. Accordingly, as the rollers 14, 16 are turned by motor 22, the scraping plates 40R, 40L scrape any matter adhering to the surface of the corresponding rollers 14, 16. As the scraping plates 40R, 40L scrape this matter off the rollers, the scraped matter falls out of the housing through the open bottom 36. The location of the scraping plates 40L, 40R under rollers 14, 16 causes the scraped matter to fall between the plates as indicated by arrows F (see Fig. 2). The scraping plates 40R, 40L extend substantially the length of the rollers. The plates 40R, 40L are also of sufficient width to shield the upper heating elements 18R, 18L from falling scraped matter (see Fig. 2).

As noted previously, the flat bread warmer 10 includes heating elements 18R, 18L 20R, 20L. In this embodiment, there are four heating elements 18R, 18L, 20R, 20L, though in alternate embodiments, the flat bread warmer 10 may have any desired number of heating elements. As seen best in Fig. 2, the heating elements are disposed in the housing 12 in two rows of the heating elements. The upper row has heating elements 18R, 18L. The heating elements 18R, 18L are electrical resistance heaters such as Calrod TM elements of about 850W, though any suitable electrical heating elements may be used. In alternate embodiments, the heating elements may use burners if desired. As seen in Fig. 2, the upper heating elements 18R, 18L are mounted in the housing somewhat offset from the centerline of the rollers 14, 16. Each upper heating elements 18R, 18L extends substantially the length of the housing 12 and is mounted within sufficient proximity from a corresponding roller 14, 16 to heat the roller when energized. By way of example, heating element 18R heats roller 14, and heating element 18L heats roller 16. Each upper heating element 18R, 18L has a corresponding heat reflector 68R, 68L for directing heat from the heating element towards the respective roller 14, 16 immediately above the heating element 18R, 18L. The heat reflectors 68R, 68L may be made of sheet metal or any other suitable material including for example refractory materials. The heat reflectors 68R, 68L are located alongside the corresponding heating elements 18R, 18L to collect radiant heat emitted from the elements 18R, 18L and redirect the heat towards the rollers 14, 16. As seen in Fig. 2 the heat reflectors 68R, 68L may be curved with the concavity of the reflectors facing the corresponding heating elements 18R, 18L. The upper heating elements 18R, 18L,as well as the lower heating elements 20R, 20L are connected by suitable wiring (not shown) to a power source (not shown).

As shown in Fig. 2, the lower heating elements 20R, 20L are disposed below, and substantially aligned with the upper element 18R, 18L. In alternate embodiments, the lower heating elements may be located outwards or inwards relative to the upper heating elements with sufficient space between the opposing lower elements for matter scraped by the scrapers to fall between the opposing elements without touching the elements. The lower heating elements 20R, 20L are substantially similar to upper heating elements 18L, 18R. In the embodiment shown in Fig. 1, the lower elements 20R, 20L have a lower heat output, such as for example about 300-400w, in comparison to upper elements 18R, 18L. In alternate embodiments, the lower heating elements may be capable of delivering any suitable heat output including the same or even higher heat output than the upper elements. In other alternative embodiments, the heater may have additional rows of heating element of any desired heat output. As seen in Figs. 1-2, the lower heating elements 20R, 20L are also provided with heat reflectors 70R, 70L which are similar to heat reflectors 68R, 68L described before. The lower reflectors are disposed to direct heat from the lower heating elements 20R, 20L inwards and down to heat the center of the housing and the standoff region 27 below the housing 12. Inward from the lower elements 20R, 20L are a pair of shield members 72L, 72R (see Fig. 2). In the preferred embodiment, the shield members 72R, 72L are made of metal and have a general channel configuration. The shield members extend substantially the length of the housing (alongside a corresponding lower heating element). The shielding members 72L, 72R are mounted with the flanges 76L, 76R directed outwards and over the heating elements (see Fig. 2). The web of the shield members 72R, 72L is perforated with vent holes 74R, 74L which allow heat from the heating elements 20R, 20L to pass through the shield members 72R, 72L to heat the center region of the housing. The vent holes 74R, 74L however are sized to prevent debris matter scraped from the rollers, from passing through the' shield members.

Tortillas A, and other flat breads are heated using flat bread warmer 10 generally in the manner described below. The heater 10 is energized by the user operating controller 24C. The user may also select a speed for rotating the rollers 14, 16. The motor 22 then turns the rollers 14, 16 (via transmission 23) as described previously. The heating elements 18L, 18R, 20L, 20R heat up and start generating heat. The rollers 14, 16 are preheated by the upper heating elements 18R, 18L. Rotation of the rollers 14, 16 over the upper heating elements 18R, 18L effect substantially even heating of the respective rollers 14, 16. A suitable sensor may be used to sense the temperature of the rollers 14, 16 and indicate to the user that the rollers 14, 16 have reached the desired temperature. Otherwise, the flat bread warmer 10 may have a suitable timer with alarm or signal to indicate to the user that sufficient time has passed for the rollers 14, 16 to have reached operating temperature. When the rollers are heated sufficiently to reach a desired surface temperature, the user may then insert (in the direction indicated by arrow I) the tortilla A into the flat bread heater 10 through top opening 34. As shown in Fig. 2, the tortilla A is received between spring biased counter rotating rollers 14, 16. As the tortilla A enters between the rollers 14, 16, the rollers 14, 16 move apart (as indicated by arrows C,C¹) to accommodate the tortilla in between. The springs 52, 54 however, bias the rollers 14, 16 inwards' against the tortilla A to maintain firm contact between the outer surfaces 100, 102 of the rollers and the tortilla A. This contact with the heated non-stick surfaces 100, 102 of the rollers 14, 16 on both sides of the tortilla A, rapidly heats the portion of the tortilla A between the rollers 14, 16. As the rollers 14, 16 turn, the tortilla is drawn through between the rollers 14, 16 and is heated entirely in the above described manner. Each point on the surface of each roller 14, 16 may contact the tortilla once as the tortilla passes between the rollers. After passing through the heated rollers 14, 16 the now evenly heated tortilla A drops away from the rollers and through the center of the housing into the standoff region 27 where a receiving container (not shown) may be located.

The non-stick surfaces 100, 102 on the rollers 14, 16 prevent the tortilla A or portions thereof from adhering to the rollers. In the event that any matter from the tortilla A does become stuck on the rollers 14, 16, the scrapers 40R, 40L scrape the stuck matter off (which falls in the direction indicated by arrows F) as the rollers turn past the scrapers. As the heated tortilla A falls through the housing, the lower heaters 20R, 20L continue to heat the tortilla thereby preventing the tortilla from losing any significant heat. The lower heating elements 20R, 20L continue to keep the tortilla warm when in the standoff portion 27. Additional tortillas can then be sequentially heated in a similar manner.

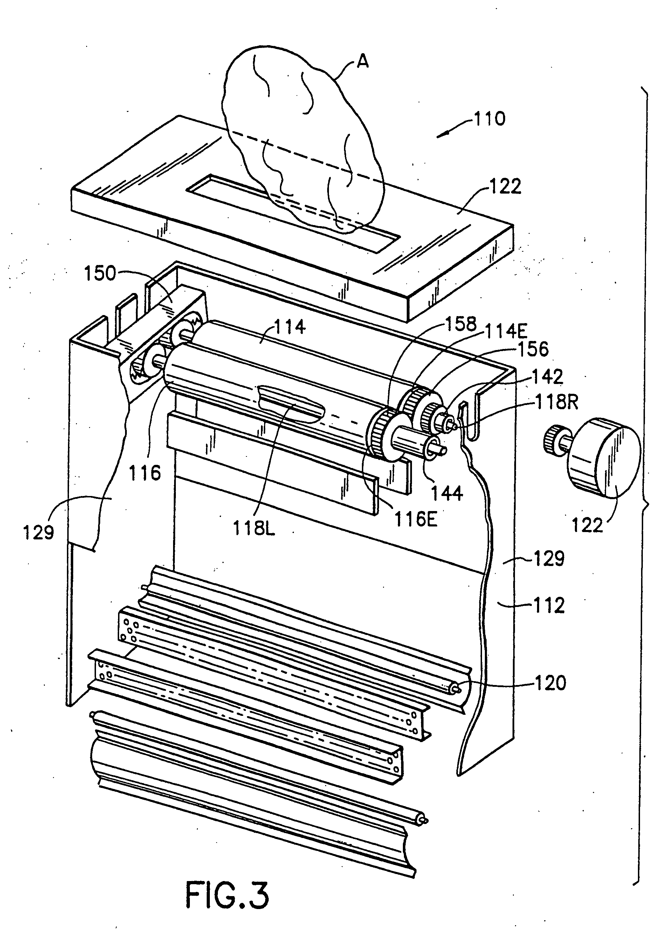

Referring now to Fig. 3 there is shown an exploded perspective view of a flat bread warmer 110 in accordance with another embodiment. The flat bread warmer 110 in this embodiment is similar, except as otherwise described, to the warmer 10 described before and shown in Figs. 1-2. Accordingly, similar items are similarly numbered. Flat bread warmer 110 also has spring biased rollers 114, 116 inside the warmer housing 112 which can be accessed by lifting cover 122. As in the other embodiment, the rollers 114, 116 are heated by corresponding heating elements 118R, 118L. In this case, as shown in Fig. 3, the heating elements are located within the corresponding rollers 114, 116. Supplemental heating elements 120R, 120L similar to elements 20R, 20L described before may be located outside the rollers 114, 116 to heat the interior of the housing. The rollers 114, 116 in this embodiment may be hollow cylinders made of heavy gauge metal tubes or pipes. Otherwise, the rollers may be made of rolled metal plates. The interior of the rollers is sufficiently large in size to allow placement of a heating element 118R, 118L inside the roller. The heating elements 118R, 118L are similar to elements 18R, 18L and may be Calrod TM elements or any other suitable electrical heating elements. Each heating element 118R, 118L may extend through the corresponding roller 114, 116 for the entire length of the roller. The rollers 114, 116 have end caps 114E, 116E at opposite ends. The end caps 114E, 116E provide a support surface for mounting or attaching gears 156, 158 as well as support shafts 142, 144 to the rollers. The end caps however are provided with an aperture or port hole which allow the heating elements 118R, 118L to extend from the ends of the rollers. Moreover, shafts 142, 144, and gears 156, 158 on the rollers are hollow so that the heating elements 118R, 118L inside the rollers may extend through the shafts and gears to the opposite end walls 129 of the housing. The heating elements 118R, 118L are fixedly mounted to the end walls 129, and are connected by suitable wiring (not shown) to the power system (not shown) of the warmer 110. As can be realized, from Fig. 3, the rollers 114, 116 are rotated by motor 122 via gears 156, 158 about the heating elements 118R 118L which are fixed to the housing 112. Locating the heating elements 118R, 118L inside the rollers 114, 116 ensures that the heat output of the heating elements is delivered substantially entirely into the rollers which surround the respective elements. In this manner, the efficiency of the warmer is increased as the power demand on the heaters in order to raise the temperature of the rollers a unit increment is decreased. Furthermore, the position of the heating elements inside the respective rollers results in substantially uniformly heated rollers. Warm-up times for raising the temperature of the rollers are also reduced.

The solution presented here will allow speedy warming of the tortilla without burning and with very little consumer focus. The speed of the heating and the even heating will produce a better product. With this product there will be very little need to store tortillas as they can be made as needed. The size of the product will allow people to use it at the table.

## Claims

1. A flat bread warmer (10) **characterized by**:
a housing (12,112);
a pair of opposing rollers (14,16,114,116) rotatably mounted in said housing (10); and
heating elements (18R,18L,118R,118L) mounted in said housing (12,112) for heating at least one of the opposing rollers (14,16,114,116), said opposing rollers (14,16,114,116) being spring biased (52,54) toward each other to pinch a flat bread in between for simultaneously heating the flat bread and moving the flat bread through at least a portion of said housing (12,112).

2. The flat bread warmer of claim 1 further **characterized by** each roller (14,16) has an associated heating element (18R,18L) and further comprising a reflector (68R,68L) associated with each heating element (18R,18L) to direct heat from the heating element to its associated roller (14,16).

3. The flat bread warmer of claims 1 or 2 further **characterized by** a scraping plate (40R,40L) associated with each roller (14,16,114,116), each said scraping plate (40R,40L) being mounted in said housing (12,112) and having a portion contacting the circumference of its associated roller (14,16,114,116) to scrape away any matter which may adhere to the roller (14,16,114,116).

4. The flat bread warmer in accordance with any of the preceding claims **characterized by** each heating element (18R,18L) is disposed in said housing (12) below its associated roller (14,16), and each scraping plate (40R,40L) is disposed in said housing (12) below its associated roller (14,16) and has a sufficient width and is positioned inside of its associated heating element (18R,18L) to shield the heating element (18R,18L) from scraped matter falling from the rollers (14,16).

5. The flat bread warmer of claim 1 further **characterized by** at least one set of lower heating elements (20R,20L,120) spaced from each other to allow passage of the flat bread therebetween, said lower heating elements (20R,20L,120) being positioned in said housing (12) below said rollers (14,16,114,116) to heat the flat bread after it passes through the rollers (14,16,114,116).

6. The flat bread warmer of claim 5 further **characterized by** a reflector (70R,70L) associated with each lower heating element (20R,20L,120) to direct heat from the lower heating element (20R, 20L, 120) inwardly toward the flat bread passing therebetween.

7. The flat bread warmer of claim 6 further **characterized by** a shield member (72R,72L) associated with said each lower heating element (20R,20L,120), said shield member (72R,72L) being positioned inwardly in said housing (12) from its associated lower heating element (20R,20L,120).

8. The flat bread warmer of claim 7 **characterized by** each said shield member (72R,72L) is generally channel shaped including an upper flange (76R,76L) and a web portion, said upper flange (76R,76L) being directed outwardly over a top of its associated lower heating element (20R,20L,120), said web portion being perforated (74R,74L) to permit heat to flow through the shield member (72R,72L).

9. The flat bread warmer of claim 5 **characterized by** said housing (12,112) including an upper portion (26) and a lower portion (27), said upper portion (26) enclosing said rollers (14,16,114,116), said heating elements (18R,18L,118R,118L) for said rollers (14,16,114,116) and said lower heating elements (20R,20L,120), said upper portion (26) being open into said lower portion (27), and said lower portion (27) having at least one side with an opening therein, said housing (12,112) further including a lid (22) on the top of its upper portion (32) having an opening (34) therein for the passage of the flat bread therethrough.

10. The flat bread warmer of claim 5 further **characterized by** a motor (22) mounted to said housing (12,112) and connected to said rollers (14,16,114,116) for rotating said rollers (14,16,114,116), and wherein said heating elements (18R,18L,118R,118L) for said rollers (14,16,114,116) and said lower heating elements (20R,20L,120) are resistance heaters.

11. A flat bread warmer (10) **characterized by**:
a housing (12,112);
a pair of generally parallel opposed rollers (14,16,114,116) mounted in said housing (12,112) for rotation about a horizontal axis in opposite directions, said rollers being spring biased (52,54) toward each other to pinch a flat bread therebetween and move the flat bread through at least a portion of said housing (12,112);
a heating element (18R,18L,118R,118L) associated with each roller (14,16,114,116) and mounted in said housing (12,112) in proximity to its associated roller for heating its associated roller (14,16,114,116);
at least one set of spaced lower heating elements (20R,20L,120) mounted in said housing (12,112) below said rollers (14,16,114,116) for heating said flat bread after it passes through said rollers (14,16,114,116); and
a motor (22) mounted to said housing (12,112) and connected to said rollers (14,16,114,116) for rotating said rollers (14,16,114,116).

12. The flat bread warmer of claim 11 **characterized by** each said heating element (18,20) is positioned in said housing (12) below and offset outwardly from the vertical centerline of its associated roller (14,16).

13. The flat bread warmer of claims 11 or 12 further **characterized by** a reflector (68,70) associated with each said heating elements (18,20), each said upper reflector (68R,68L) being positioned within said housing (12) on the outside of its associated heating element (18R,18L) to direct heat from the heating element to its associated roller (14,16), and a lower reflector (70R,70L) associated with each of said lower heating elements (20R,20L), each said lower reflector (70R,70L) being positioned within said housing (12) on the outside of its associated lower heating element (20R,20L) to direct heat from the associated lower heating element inwardly toward the flat bread passing therebetween.

14. The flat bread warmer of claim 13 further **characterized by** a scraping plate (40R,40L) associated with each roller (18,20), each said scraping plate(40R,40L) being mounted in said housing (12) and having a portion contacting the circumference of its associated roller (18,20) to scrape away matter adhering to the roller.

15. The flat bread warmer of claim 14 **characterized by** each scraping plate (40R,40L) extends below its associated roller (14,16) and has a portion positioned inside from an associated heating element (18R,18L) to shield the associated heating element (18R,18L) from scraped matter falling from the rollers.

16. The flat bread warmer of claim 15 further **characterized by** a shield member (72R,72L) associated with each of said lower heating elements (20R,20L), said shield member (72R,72L) being positioned inwardly in said housing (12) from its associated lower heating element (20R,20L) to shield said associated lower heating element from scraped matter falling from the rollers (14,16).

17. The flat bread warmer of claim 16 **characterized by** said shield member is generally channel shaped including an upper flange (76R,76L) and a web portion, said upper flange (76R,76L) being directed outwardly over the top of the associated lower heating element (20R,20L), said web portion being perforated (74R,74L) to permit heat to flow through the shield member.

18. The flat bread warmer of Claim 11, **characterized by** the heating element (118) associated with at least one of the opposed rollers (114,116) is located within the at least one roller (114,116).

19. A method of warming flat bread **characterized by** the stages of:
providing a pair of opposed counter-rotating rollers (14,16,114,116);
heating each of said rollers (14,16,114,116) by a proximate heating element (18,20,118,120); and
pinching said flat bread between said heated rollers (14,16,114,116) and substantially simultaneously heating (18,118) said flat bread and moving said flat bread through said rollers.

20. A flat bread warmer (10) **characterized by**:
a housing (12,112);
a pair of opposing heating rollers (114,116) rotatably mounted in the housing (112) for contacting and heating a flat bread introduced between the opposing heating rollers (114,116); and
heating elements (118R,118L) mounted in the housing (112) for heating the opposing heating rollers (114,116), wherein at least one of the heating elements (118R) is located inside a corresponding one of the opposing heating rollers (114).
